(19) Europäisches Patentamt
European Patent Office
Office européen des brevets

(11) Publication number: **0 514 617 A1**

# (12) EUROPEAN PATENT APPLICATION

(21) Application number: **91870084.0**

(51) Int. Cl.[5]: **C08L 53/02**, C08L 35/06

(22) Date of filing: **22.05.91**

(43) Date of publication of application:
**25.11.92 Bulletin 92/48**

(84) Designated Contracting States:
**AT BE CH DE ES FR GB IT LI LU NL SE**

(71) Applicant: **Monsanto Company**
**Patent Department 800 North Lindbergh Boulevard**
**St. Louis Missouri 63167-7020(US)**

(72) Inventor: **Ruelle, Robert**
**53, Résidence La Prairie**
**B-7410 Ghlin(BE)**
Inventor: **Cannon, Maureen Anne**
**45, Avenue H. Boulenger**
**B-1180 Brussels(BE)**
Inventor: **Dufour, Daniel Louis**
**45, Avenue du Fort Jaco**
**B-1180 Brussels(BE)**

(74) Representative: **Ernst, Hubert et al**
**Monsanto Services International S.A., Patent Department, Avenue de Tervuren 270-272, Letter Box No. 21**
**B-1150 Brussels(BE)**

## (54) Polyblends contaning SBS, terpolymer and crosslinker.

(57) The invention pertains to blends of polymers containing a styrene butadiene block copolymer, a polymer having reactive carboxyl moieties and a crosslinking agent. The polymer is most preferably represented by a terpolymer. The crosslinking agent contains reactive moieties such as hydroxy-, amine-, and epoxy-moieties and has a molecular weight which is preferably in the range of from about 1500 to 60000. The crosslinker can be used in relatively low molecular ratios vs. the polymerisable dicarboxylic acid in the polymer. Shaped articles made from the polyblends herein can be processed under high temperature conditions without suffering alterations; the articles so produced show desirable physical properties inclusive of reduced plasticiser migration, reduced fogging and enhanced low-temperature flexibility.

EP 0 514 617 A1

This invention relates to polyblends of polymeric matrix ingredients comprising a butadiene styrene block copolymer, a polymer having free (reactive) carboxylmoieties and a crosslinking agent. The claimed polyblends exhibit desirable and beneficial properties as regards the processing thereof and the physical properties of the articles made therefrom.

Unless stated otherwise, all proportions and percentages hereinafter are by weight.

The individual components of the claimed blends are well-known and have, at least in part, found industrial application. Butadiene-styrene block copolymers and combinations thereof with various other polymeric substances are well known in the art. Representative of this state of the art are, for example, Japanese patent 7957582 relative to packaging laminates made from butadiene styrene block copolymers and ethylene-vinyl acetate copolymer, and Japanese patent 8848362 relative to primers containing styrene butadiene block copolymers in combination with ethylene-propylene block copolymers. Polymer blends based on polyurethanes and terpolymers are known from British patent application 9006805.7.

While polyblends based on butadiene styrene block copolymer in combination with a further polymer can constitute economically interesting and viable combinations, their broad scale use was slowed down because of marginal properties, inclusive of transparency, flexibility and heat resistance.

In particular, plasticized polyblends currently available can be subject to undesirable alteration phenomena such as plasticizer migration, fogging, a decrease in plasticity and brittleness, which render these polymeric products less suitable for broad scale application. Alloys such as e.g. described in UK application 9018910.1 possess in general good overall properties but present relatively minor weaknesses such as low temperature impact and tension set, the latter ones being comparable to the corres-ponding parameters for plasticized polymers. There was thus a standing desire to make available polyblends which can be processed easily, and the articles resulting from the processing of said polyblends should desirably possess improved physical properties inclusive of low-temperature flexibility, low temperature impact, resistance to relatively high-temperature processing, slightly improved tension set and rubber-like final product appearance.

It is a major object of the present invention to make available polyblends which can be processed into shaped articles under high temperature conditions without suffering unacceptable alterations. It is a further object of this invention to make available polyblends which confer to the articles made therefrom desirably physical properties inclusive of reduced plasticizer migration, reduced fogging and enhanced low-temperature flexibility.

The present invention is based, in part, on the discovery that multicomponent polyblends can now be formulated which are easily processable over a broad range of conditions inclusive of high temperature processing. The polyblends herein, which are suitable for use in embossing applications, do have a rubber-like appearance and can be used beneficially for a broad range of commercial applications.

The polyblends of the invention herein comprise:

a) from 20% to 89% of a styrene butadiene block copolymer;

b) from 10% to 70% of a polymer comprising :

1. from 10% to 95% of a vinylaromatic monomer;
2. from 1% to 50% of a polymerisable unsaturated dicarboxylic acid; and
3. from 0% to 50% of another monomer; wherein the amounts of components 1, 2 and 3 total 100%;

c) from 1% to 25% by weight of a crosslinker;

d) from 0% to 50% by weight of a further polymeric ingredient;

wherein the amounts of components a,b,c and d total 100%.

In one preferred embodiment of the invention the polymer can be represented by a terpolymer. The polymer which is preferably used in a level of from 15% to 60% is, in a particularly preferred embodiment, represented by a terpolymer comprising from 20% to 70% of the vinylaromatic monomer, from 15% to 40% of the polymerisable unsaturated dicarboxylic acid and from 5% to 40% of the other monomer which is a polymerisable ester of an unsaturated carboxylic acid.

The crosslinkers are most preferably used at a level of from 3% to 15%.

The invention also comprises processes of producing articles by means of conventional techniques inclusive of extrusion (for example a profile or a film), injection-moulding or blow-moulding thereby utilising the styrene butadiene block copolymer containing polyblend in accordance with the invention herein.

Styrene butadiene block copolymers are well-known in the technical community and have found widespread commercial application. Block copolymers are copolymers with polymeric chains containing alternating blocks of homo-or copolymers, each block differing materially form the next adjacent block. Polystyrene-polybutadiene-polystyrene block copolymers are for example described in GB-A-1.264.741. These block copolymers can be in linear or branched and/or radial configuration. Preferred species for use herein can be represented by radial block copolymers such as or comparable to FINAPRENE® F414.

The styrene butadiene block copolymer is generally used in levels in the range of from 20% to 89%, preferably from about 20% to about 85%. In one preferred aspect of the invention the block copolymer represents from about 28% to about 45% of the polyblend and is used in combination with from about 70% to about 53% of the terpolymer. The like polyblends and the articles made therefrom are characterised by semi-flexible properties Comparable properties of PVC-based products are substandard, particularly with respect to semi-flexible characteristics and, in fact, require the presence of plasticisers which is known to lead to product deficiencies inclusive of plasticiser migration and fogging.

In another preferred embodiment herein, the block copolymer is used in levels of from about 48% to about 70 % in combination with from about 28% to about 50% of the terpolymer. Such polyblends, which exhibit excellent semi-flexibility under substantial absence of plasticiser, can serve as substitutes for polyurethane-based polyblends. The benefits of the claimed polyblends are particularly noteworthy and constitute very desirable and sought-after performance objectives.

The essential polymer component is used in an amount from 10% to 70%, frequently from about 20% to 60% depending upon others the contemplated end-use of the polyblends. The monomers in the polymer are represented by: a vinylaromatic monomer; a polymerisable unsaturated dicarboxylic acid; and optionally, but preferably, another monomer, which latter monomer is different from the vinylaromatic and from the dicarboxylic acid monomers. The levels of these monomers are expressed by reference to the polymer (100%).

The vinylaromatic monomer represents from 10% to 95%, preferably from 40% to 92%. The vinylaromatic hydrocarbon monomer is preferably styrene although hydrocarbon derivatives of styrene such as lower-$C_1$-$C_6$-alkylstyrenes for example alpha-methyl styrene, and also vinyltoluene are useful.

The polymerisable unsaturated dicarboxylic acid broadly represents from 1% to 50%, usually from 5% to 50%, preferably from 8% to 40%, and more preferably from 8% to 30%. The term "dicarboxylic acid" as used herein is meant to embrace acid species and/or anhydride species of said dicarboxylic acid. The most preferred dicarboxylic acid monomer is maleic acid although other species inclusive of chloromaleic acid, methylmaleic acid, sulfomaleic acid, phenyl- or benzylmaleic acid, fumaric acid, mesaconic acid, and aconitic acid and mixtures of such acid monomers inclusive of maleic acid can also be used. Part of the dicarboxylic acid can be imidized.

The other monomer, component b 3. of claim 1, can be represented by a polymerisable ester of an unsaturated carboxylic acid and also by acrylonitrile. The other monomer generally represents from 0% to 50%. In a preferred embodiment the monomer is the polymerisable ester which can advantageously represent from 5% to 20% depending upon the proportions and the chemical nature of the other monomers in the polymer, the crosslinker and the desired end-use properties of the polyblend. In another preferred embodiment herein said polymerisable ester is benefically present in a level from 25% to 45%, the selection criteria being as referred to in the preceding sentence. It is recognised, however, that the monomer can be used, depending upon the selection criteria at any level within the broad 0% to 50% range. The preferred polymerisable ester monomer is preferably methyl methacrylate although functionally related species inclusive of methyl acrylate, ethyl acrylate, ethyl methacrylate and butyl acrylate can be used. Mixtures of such ester monomers or mixtures of the ester monomer and acrylonitrile in e.g. a weight ratio of from 2:1 to 4:1 can also be used.

The crosslinker can be used in a level of from 1% to 25%, preferably from 2% to 20%, more preferably from 3% to 15%. The crosslinker contains, at least two, reactive groups capable of providing the desired crosslinking. The reactive groups in the crosslinker can, for example, be independently selected from amine-, preferably primary amine-moieties, hydroxy- and epoxy- moieties. The reactive groups in the crosslinker can be identical or different. One preferred class of crosslinkers is represented by polyamines, most preferably diamines, which can form chemical bonds with the reactive carboxyl moieties on the polymer. Catalysts can be used to accelerate the reaction between crosslinkers and carboxylic acid groups. The proper choice of the catalyst should take into consideration the natures of the crosslinker and the polymer. For example, the sodium salt of paratoluene sulfonic acid can beneficially be used when reactive hydroxy groups are present in the crosslinker.

The inventive benefits can be provided by relatively low molecular levels of crosslinkers as compared to the correspondingly expressed levels of the polymerisable unsaturated carboxylic acid in the polymer.

Performancewise effective and beneficial crosslinking can result from molecular ratios of crosslinker to polymerisable, unsaturated dicarboxylic acid of as low as 0.01, and more preferably 0.04. Molecular ratios of crosslinker : polymerisable dicarboxylic acid in the range of from 0.10 to 0.25 were found to deliver, in some respects, preferred performances.

A preferred class of crosslinkers are diamines. Representative species of such compounds can be polyoxyalkylenes, containing two reactive, and preferably terminal, amine groups. It is understood, however,

that crosslinkers containing, at least, one non-terminal reactive group can be used beneficially herein.

The crosslinker herein can also be represented by compounds containing reactive hydroxy- and/or epoxy-moieties. Suitable hydroxycrosslinkers can be represented by polyethylene glycols, polypropylene glycols and polytetramethylene glycols bearing, at least, two reactive hydroxy moieties per molecule.

The crosslinker can also be represented by a siloxane having the formula :

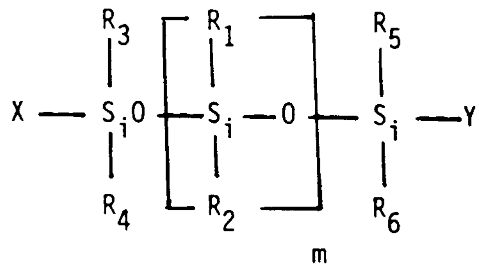

wherein, $R_1$, $R_2$, $R_3$, $R_4$, $R_5$ and $R_6$ independently represents a straight or branched, substituted alkyl group having from 1 to 8 carbon atoms or a carbocyclic group having 5 or 6 carbon atoms, m is an integer such that the molecular weight of the resulting siloxane is from 1500 to 60000, and X and Y individually represents a terminal group carrying a reactive moiety

The backbone of the siloxane crosslinker is generally represented by a homopolymeric polydialkylsiloxane. The alkyl substituent can be represented by linear of branched species having from 1 to 8 carbon atoms, or by a carbocyclic group having 5 or 6 carbon atoms. The alkyl group can be substituted, e.g. by hydroxy-groups. The most preferred alkyl substituent is the methyl group. It is, of course, also possible to use a combination of chemically different substituents, i.e. $R_1$ to $R_6$ are the same or different moieties. The polydialkyl siloxane backbone can also be represented by a polymeric configuration wherein the

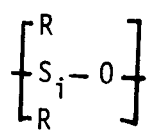

unit has been copolymerized with suitable non-silicon containing monomers such as ethylene glycol. In such block copolymer arrangements, the molar ratio of

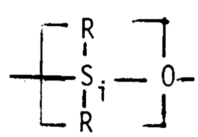

to non-silicon containing monomer shall be, at least 1, most preferably from 2 to 4.

The reactive moieties in the terminal groups X and Y can be independently selected from amine-, hydroxy- and epoxy-moieties. The bridging unit within the terminal groups X and Y serves to connect the reactive moeity to the siloxane backbone as defined hereinbefore. Examples of suitable bridging groups are alkyl-groups having e.g. from 2 to 6 carbon atoms. Examples of preferred siloxane crosslinkers are:

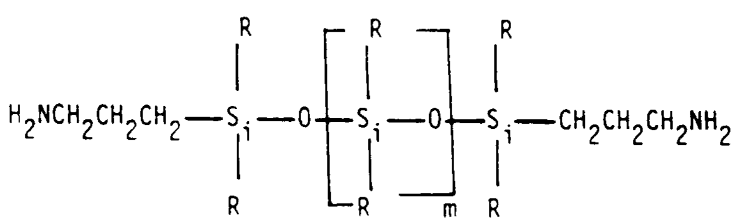

i.e. having identical aminopropyldimethyl terminal groups; and

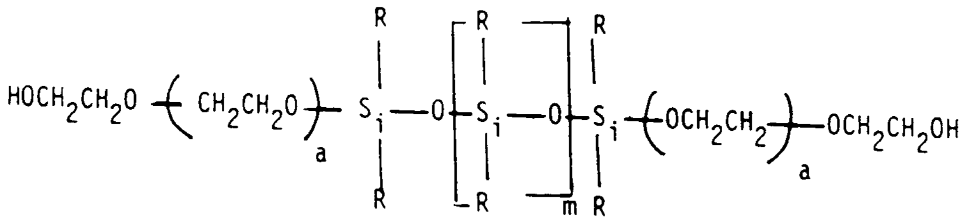

i.e. having identical carbinol terminal groups.

The most preferred siloxane crosslinkers herein are represented by diaminoproxyl terminated polydimethylsiloxane and dihydroxy terminated polyethyleneoxide polydimethylsiloxane block copolymers wherein the ethylene oxide block copolymers i.e. a is from 1 to about 50.These preferred diaminopropyl siloxanes have a molecular weight of from 22,000 to 28,000 whereas the preferred dihydroxysiloxanes have a molecular weight of from 2,000 to 60,000.

While for certain applications, the crosslinker shall contain at least two identical reactive groups (the terms groups and moieties can be used interchangeably), crosslinkers containing non-identical groups can be used and, subject to routine optimisation, can provide the inventive benefits.

The essential crosslinker component preferably has a molecular weight above about 500, more preferably above about 1,500 such as in the range of from 1,500 to 60,000. In a particular embodiment, the molecular weight of a preferred reactive hydroxy-groups containing crosslinker is in the range of from about 2,000 - 8,000. The preferred siloxane crosslinkers have a molecular weight in the range of from 2,000 to 30,000.

Examples of suitable crosslinkers comprise amine-terminated polypropylene glycols having two reactive amine-moieties and a polypropylene glycol backbone containing about 33 and 68 repeating units and having molecular weights of about 2,000 and 4,000 respectively. Comparably useful are polyetherdiamines with two reactive primary amine groups based on a predominantly polyethylene oxide backbone containing about 40, 85 or 130 repeating units having molecular weights of approximately 2,000, 4,000 and 6,000 respectively.

The polyblends herein further can contain as an optional component, from 0 to 50% preferably from 10% to 40% of a further polymeric component. This optional polymer can be represented, for example, by conventional acrylonitrile-butadiene-styrene copolymer (ABS) and methyl methacrylate-butadiene-styrene copolymer (MBS).

The components of the polyblend can be blended together by conventional techniques which are known to be suitable therefor. Such techniques can involve mechanical shear at an elevated temperature, for example in an extruder.

The polyblends can contain one or a series of conventional additives which are used for their art-established functionality in levels possibly from 0 to 2 % or even more. Examples of the like additives and optionals include : antioxidants, fillers, flame retardants, colourants, stabilisers, plasticizers, light stabilisers, etc.

The polyblends herein are especially useful for applications requiring superior physical properties such as low flexural modulus and low temperature impact properties while maintaining desirable heat resistance properties. Such applications are, for example automotive parts, cables, pipes, flexible films, tapes, etc.

The invention is illustrated by the following examples.

## EXAMPLES

In the following examples a number of polyblends were prepared and calendered into films and the vicat softening point, tension set and IZOD -20 ° C impact strength of each film were measured.

TABLE I

| Composition | SBS(1) | Polymer(2) | Crosslinker(3) | |
|---|---|---|---|---|
| | - Parts - | - Parts - | - Parts - | - MW - |
| A | 70 | 30 | - | - |
| 1 | 70 | 30 | 5 | 4000 |
| 2 | 70 | 30 | 10 | 4000 |

(1): FINAPRENE® F414

(2): The polymer is represented by a styrene-maleic anhydride methyl methacrylate copolymer (68% styrene; 25% maleic anhydride; 7% methylmethacrylate).

(3): The crosslinker is represented by polyether diamines which are based on a predominantly polyethylene oxide backbone (JEFFAMINE-ED®).

Composition A relates to a noncrosslinked polyblend whereas Examples 1 and 2 embody the technology in accordance with this invention.

Powdered mixtures (150 g) of the polymer blends of Table I (A, Ex. 1-2) were molten on a Schwabenthan laboratory two-roll mill. The diamine crosslinker was then added to the melt. The sample was calendered into a film 1 mm thick. To make samples for the different measurements several layers of film were compressed (250 bar) at 210 ° C into a plaque 3.2 mm thick;

The physical measurements are reported hereinafter :

TABLE II

| Composition | VICAT 10 N (4) | TENSION SET (5) | IZOD (-20-C) (6) |
|---|---|---|---|
| A | 57.5 | 20 | N.B. |
| 1 | 53.9 | 17 | N.B. |
| 2 | 53.2 | 16 | N.B. |

(4) VICAT ISO - 306 - 1974.
(5) Tension Set ASTM D412.
(6) IZOD ISO 180-1982 J/M.

These data show and confirm that the inventive technology yields desirable tension set benefits without adversely affecting other physical properties such as low-temperature impact, elongation at fail and hardness.

## Claims

**1.** A polyblend comprising
a) from 20% to 89% by weight of a styrene butadiene block copolymer;
b) from 10% to 70% by weight of a polymer comprising :
1. from 10% to 95% of a vinylaromatic monomer;
2. from 1% to 50% of a polymerisable unsaturated dicarboxylic acid; and
3. from 0% to 50% of another unsaturated carboxylic acid;

wherein the amounts of components 1,2 and 3 total 100%;
c) from 1% to 25% by weight of a crosslinker;
d) from 0% to 50% by weight of a further polymeric ingredient;
wherein the amounts of components a,b,c, and d total 100%.

**2.** The polyblend in accordance with claim 1 wherein the crosslinker, contains at least two reactive moieties selected from amine-, hydroxy- and epoxy-moieties, said crosslinker having a molecular weight in the range from about 500 to 60.000.

**3.** The polyblend in accordance with claims 1 and 2 wherein the styrene butadiene is used at a level of from 28% to 45% by weight, the polymer is represented by a terpolymer containing from 5% to 20% of the polymerisable ester of an unsaturated carboxylic acid, said terpolymer being used at a level of from 53% to 70% by weight.

**4.** The polyblend in accordance with claims 1 and 2 wherein the styrene butadiene is used at a level of from 48% to 70% by weight, the polymer is represented by a terpolymer containing from 25% to 45% of the polymerisable ester of an unsatur-ated carboxylic acid, said terpolymer being used at a level of from 28% to 50% by weight.

**5.** The polyblend in accordance with claims 3 and 4 wherein the molecular ratio of the crosslinker to the polymerisable unsaturated dicarboxylic acid in the polymer is in the range of from 0.04 to 0.25.

**6.** The polyblend in accordance with claims 2 and 5 wherein the crosslinker, having two reactive terminal amine groups, has a molecular weight in the range of from about 1.500 to 30.000.

**7.** The polyblend in accordance with claims 2 and 5 wherein the crosslinker having two reactive hydroxy-groups has a molecular weight in the range of from about 3000 to 8000.

**8.** The polyblend in accordance with claim 1 which in addition, contains from 10% to 40% by weight of the further polymeric ingredient which is represented by acrylonitrile-butadiene-styrene or methyl methacrylate-butadiene-styrene copolymers.

**9.** The polyblend in accordance with claim 8 wherein the crosslinker has a polypropylene glycol or polyethylene oxide backbone with two reactive primary amine groups, said crosslinker having a molecular weight in the range of from about 2000 to 6000.

**10.** The polyblend in accordance with claims 5 and 8 wherein the crosslinker is a siloxane having two reactive amine or hydroxygroups said crosslinkers having a molecular weight of 22000 to 28000 or 2000 to 6000 respectively.

**11.** A process of producing an article by extrusion, injection-molding or blow-molding of the polyblend in accordance with any of the foregoing claims.

European Patent Office

# PARTIAL EUROPEAN SEARCH REPORT

which under Rule 45 of the European Patent Convention shall be considered, for the purposes of subsequent proceedings, as the European search report

Application Number

EP 91 87 0084

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 320 538 (SHELL INTERNATIONAL RESEARCH MAATSCHAPPIJ B.V.)<br>* Page 3, lines 3-6; page 3, lines 10-22; page 4, line 30 - page 5, line 21; example 5; claims 1-5,10-11 *<br>--- | 1,2,11 | C 08 L 53/02<br>C 08 L 35/06 |
| X | US-A-4 968 747 (R. MALLIKARJUN)<br>* Column 3, lines 33-56; column 7, line 26 - column 8, line 36; example 19; claims 1,3-5,7,9,16,18-20 *<br>----- | 1,2,11 | |

TECHNICAL FIELDS SEARCHED (Int. Cl.5)

C 08 L

## INCOMPLETE SEARCH

The Search Division considers that the present European patent application does not comply with the provisions of the European Patent Convention to such an extent that it is not possible to carry out a meaningful search into the state of the art on the basis of some of the claims

Claims searched completely : 1,2,6-11

Claims searched incompletely :

Claims not searched : 3-5

Reason for the limitation of the search:

Claims 3-5 were not searched. In these claims the applicant describes 'in accordance with claims 1 and 2' that the terpolymer should contain a 'polymerisable ester of an unsaturated carboxylic acid'. However in claim 1 the applicant only mentions that an 'unsaturated carboxylic acid' could be part of the terpolymer.

| Place of search | Date of completion of the search | Examiner |
|---|---|---|
| THE HAGUE | 05-02-1992 | FUHR C.K.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0407)